# EUROPÄISCHE PATENTANMELDUNG

(11) **EP 1 270 461 A1**
(43) Veröffentlichungstag der Anmeldung: **02.01.2003**
(21) Anmeldenummer: 02013815.2
(22) Anmeldetag: 21.06.2002
(51) Int. Cl.: B65G 47/61, B65G 19/02

(54) **Hängefördereinrichtung zum Transport von an Trägerhaken aufgehängtem Fördergut**

(30) Priorität: 29.06.2001 DE 20110793 U
(71) Anmelder: WF Logistik GmbH, 86899 Landsberg (DE)
(72) Erfinder: Braunmüller, Walter, 86916 Kaufering (DE)
(74) Vertreter: Tiesmeyer, Johannes, Dr.

(57) **Zusammenfassung**

Die Erfindung betrifft eine Hängefördereinrichtung zum Transport von an Trägerhaken (16) aufgehängtem Fördergut, umfassend eine Antriebseinheit mit einem zur Bewegung längs eines Förderwegs angetriebenen, endlos umlaufenden primären Antriebszugmittel (10), insbesondere einer Antriebskette, eine Fördermitnehmeranordnung (14) mit einer Vielzahl längs des primären Antriebszugmittels (10) verteilter, zur gemeinsamen Bewegung mit diesem verbundener Fördermitnehmer (14) zur Mitnahme der Trägerhaken (16) längs des Förderwegs sowie mindestens eine Ausschleusstation (20) zur Ausschleusung der Trägerhaken (16) aus dem Förderweg, wobei zum Ausschleusen der Trägerhaken (16) diese an der Ausschleusstation (20) durch Aushebemittel (22, 28) aus dem Mitnahmeeingriff mit der Fördermitnehmeranordnung (14) aushebbar sind.

## Beschreibung

Die Erfindung betrifft eine Hängefördereinrichtung zum Transport von an Trägerhaken aufgehängtem Fördergut, umfassend eine Antriebseinrichtung mit einem zur Bewegung längs eines Förderwegs angetriebenen, endlos umlaufenden primären Antriebszugmittel, insbesondere einer Antriebskette, eine Fördermitnehmeranordnung mit einer Vielzahl längs des primären Antriebszugmittels verteilter, zur gemeinsamen Bewegung mit diesem verbundener Fördermitnehmer zur Mitnahme der Trägerhaken längs des Förderwegs sowie mindestens eine Ausschleusstation zur Ausschleusung der Trägerhaken aus dem Förderweg.

Derartige Hängefördereinrichtungen werden beispielsweise zum Transport von an Kleiderbügeln hängenden Bekleidungsstücken verwendet. Dabei ist im Regelfall jeder Fördermitnehmer zur Mitnahme eines Kleiderbügels vorgesehen, so dass die Kleiderbügel hintereinander in gleichen Abständen die Hängeförderanlage durchlaufen.

Bei einer aus dem deutschen Gebrauchsmuster DE 298 09 909 U1 bekannten Lösung hängen die Kleiderbügel auf einer Gleitschiene. Auf dieser werden sie durch Mitnehmerklinken entlanggeschoben, die an eine Antriebskette angekoppelt sind. Die Mitnehmerklinken sind über der Gleitschiene angeordnet und weisen an ihrer Unterseite Kerben auf, mit denen sie auf die Kleiderbügel abgesenkt sind. Durch den Eingriff der Kleiderbügel in die Kerben werden die Kleiderbügel von den Klinken mitgenommen.

Um bei der Lösung gemäß DE 298 09 909 U1 die Kleiderbügel von einer Hauptschiene auf eine Nebenschiene ausschleusen zu können, weist die Hauptschiene ein Schienenstück auf, das nach oben herausschwenkbar ist, so dass in der Hauptschiene ein Abwurfspalt entsteht, durch den hindurch die antransportierten Kleiderbügel nach unten auf die Nebenschiene fallen können. Beim Herunterfallen geraten die Kleiderbügel aus dem Eingriff mit den nach unten offenen Kerben der Mitnehmerklinken; letztere setzen ihre Bewegung entlang der Hauptschiene ohne die Kleiderbügel fort. Zur Betätigung des verschwenkbaren Schienenstücks der Hauptschiene ist ein gesonderter Aktuator vorgesehen, beispielsweise ein elektromagnetischer Aktuator.

Damit Hängefördereinrichtungen der hier betrachteten Art vielfältig eingesetzt werden können, besteht oftmals der Wunsch danach, Ausschleusstationen variabel entlang eines Förderwegs anordnen zu können. Bei der Lösung gemäß DE 298 09 909 U1 steht die Notwendigkeit, die Hauptschiene sozusagen aufzuschneiden, um das verschwenkbare Schienenstück anbringen zu können, einer solchen Variabilität entgegen. Stets muss die Gleitschiene bearbeitet werden, wenn eine neue Ausschleusstation aufgebaut oder eine bestehende Ausschleusstation versetzt werden soll. Eine alte, nicht mehr benötigte Ausschleusstation kann zudem nicht einfach abgebaut werden, da bei Ausbau des verschwenkbaren Schienenstücks eine Lücke in der Gleitschiene verbleiben würde.

Aufgabe der Erfindung ist es daher, eine Hängefördereinrichtung mit höherer Variabilität im Hinblick auf die Anordnung von Ausschleusstationen entlang eines Förderwegs bereitzustellen.

Zur Lösung dieser Aufgabenstellung ist bei der Hängefördereinrichtung der eingangs bezeichneten Art erfindungsgemäß vorgesehen, dass zum Ausschleusen der Trägerhaken diese an der Ausschleusstation durch Aushebemittel aus dem Mitnahmeeingriff mit der Fördermitnehmeranordnung aushebbar sind.

Bei der erfindungsgemäßen Lösung werden die Trägerhaken aus dem Eingriff mit den Fördermitnehmern ausgehoben, um sie von dem Förderweg auszuschleusen. Dies bedeutet, dass ein zur Führung der Trägerhaken oder/und der Fördermitnehmer vorgesehenes Führungsbahnensystem nicht aufgetrennt und mit einem schwenkbaren Einsatz gestützt werden muss, um - wie bei der Lösung gemäß DE 298 09 909 U1 - eine Ausschleusmöglichkeit für die Trägerhaken zu schaffen. Bearbeitungsmaßnahmen an diesem Führungsbahnensystem können unterbleiben. Dies bedingtzugleich, dass die Ausschleusstation, wenn sie an einer Stelle des Förderwegs nicht mehr benötigt wird, ohne weiteres abgebaut werden kann, da das Führungsbahnensystem unversehrt geblieben ist. Die Ausschleusstation kann so variabel entlang des Förderwegs versetzt werden, was der erfindungsgemäßen Hängefördereinrichtung eine hohe Einsatzbreite verleiht.

Bei einer bevorzugten Weiterbildung der Erfindung umfassen die Aushebemittel eine zum Ausschleusen der Trägerhaken in den Förderweg ragende Ausheberampe, auf welcher die Trägerhaken unter Lösung ihres Mitnahmeeingriffs mit der Fördermitnehmeranordnung hinaufbewegbar sind. Um die Trägerhaken zuverlässig ausschleusen zu können, umfassen die Aushebemittel vorteilhafterweise eine zur Bewegung entlang der Ausheberampe angetriebene Ausschleusmitnehmeranordnung, mittels welcher die Trägerhaken auf der Ausheberampe hinaufbewegbar sind.

Zum Antrieb der Ausschleusmitnehmeranordnung dient bevorzugt ein endlos umlaufendes sekundäres Antriebszugmittel, wobei die Ausschleusmitnehmeranordnung mindestens einen, gewünschtensfalls mehrere längs des sekundären Antriebszugmittels verteilte Ausschleusmitnehmer aufweist, welche zur gemeinsamen Bewegung mit diesem verbunden sind. Besonders günstig ist es dabei, wenn mittels eines in das primäre Antriebszugmittel eingreifenden Räderwerks, insbesondere Zahnräderwerks, Antriebsenergie von dem primären Antriebszugmittel für das sekundäre Antriebszugmittel abgegriffen wird. Auf diese Weise kann ein gesonderter Antrieb für das sekundäre Antriebszugmittel eingespart werden. Zudem kann so auf leichte Weise Synchronität zwischen den Fördermitnehmern und dem mindestens einen Ausschleusmitnehmer erzielt werden. Außerdem fördert diese Maßnahme die Variabilität der erfindungsgemäßen Hängefördereinrichtung, da mittels des Räderwerks im Wesentlichen an beliebiger Stelle des primären Antriebszugmittels die Antriebsenergie für das sekundäre Antriebszugmittel abgegriffen werden kann und so die Ausschleusstation beliebig entlang des primären Antriebszugmittels versetzt werden kann.

Um die Trägerhaken in der Ausschleusstation sicher ergreifen und auf der Ausheberampe hochbewegen zu können, empfiehlt es sich, dass der mindestens eine Ausschleusmitnehmer von oberhalb der Fördermitnehmer her zu den Trägerhaken herabreicht. Der mindestens eine Ausschleusmitnehmer kann herstellungstechnisch einfach als Mitnehmerstift ausgeführt sein.

Zweckmäßigerweise kann an die Ausheberampe eine Abwurframpe zum Abwerfen der ausgeschleusten Trägerhaken anschließen. Auf einer solchen Abwurframpe können die Trägerhaken allein durch Schwerkraft, also ohne zusätzlichen Antrieb, auf eine abzweigende Förderstrecke oder zu einer Sammelstelle herunterrutschen.

Es ist vorstellbar, dass nicht alle an der Ausschleusstation ankommenden Gegenstände ausgeschleust werden sollen, beispielsweise wenn Sortieraufgaben zu erfüllen sind. Die Ausschleusstation sollte in solchen Fällen in der Lage sein, die Gegenstände wahlweise ausschleusen oder durchlassen zu können. Hierzu ist die Ausheberampe bevorzugt zwischen einer Ausschleusstellung, in der sie in den Förderweg ragt und längs des Förderwegs antransportierte Trägerhaken auf sie auflaufen, und einer Durchlassstellung verstellbar, in der sie aus dem Förderweg herausbewegt ist und antransportierte Trägerhaken durchlässt.

Wie an sich bereits aus DE 92 09 392 U1 bekannt, ist bei einer bevorzugten Ausführungsform der erfindungsgemäßen Hängefördereinrichtung vorgesehen, dass die Fördermitnehmer unter den Trägerhaken hindurchreichen und an ihrer Oberseite eine nach oben offene Aussparung zur Aufnahme eines Trägerhakens aufweisen. Dabei können die Fördermitnehmer in Transportrichtung vor ihrer Aussparung eine in Richtung zu ihrem nachlaufenden Ende hin sanft ansteigende Auflauffläche aufweisen und gegen Federkraft in einen Hohlkanal eines das primäre Antriebszugmittel aufnehmenden Führungsgehäuses abtauchbar sein. Die federnde Absenkbarkeit der Fördermitnehmer erlaubt es letzteren, unter einen vor dem jeweiligen Fördermitnehmer liegen gebliebenen Trägerhaken einzufahren und diesen aufzunehmen. Solche freien Trägerhaken können beispielsweise bei vorsätzlicher Staubildung auftreten, aber auch dann, wenn eine Bedienungsperson einen Trägerhaken aus Unaufmerksamkeit oder Zeitmangel heraus zwischen zwei aufeinander folgende Fördermitnehmer einhängt. Die federnde Absenkbarkeit der Fördermitnehmer erlaubt zudem eine einfache Aufstauung mehrerer Trägerhaken. Wenn nämlich ein mit einem Trägerhaken bestückter Fördermitnehmer mit seiner Auflauffläche gegen ein Hindernis stößt, beispielsweise gegen einen Stopper oder gegen einen anderen Trägerhaken, so wird der betreffende Fördermitnehmer nach unten gedrückt und verliert so seinen Trägerhaken, der dann auf dem Förderweg stehen bleibt.

Die Erfindung wird im Folgenden anhand der beigefügten Zeichnungen näher erläutert. Es stellen dar:
- Fig. 1: in stark schematischer Vereinfachung ein Ausführungsbeispiel der erfindungsgemäßen Hängefördereinrichtung,
- Fig. 2: eine Seitenansicht einer Ausschleusstation der Hängefördereinrichtung der Fig. 1 und
- Fig. 3: eine Schnittansicht entlang der Linie III-III der Fig. 2.

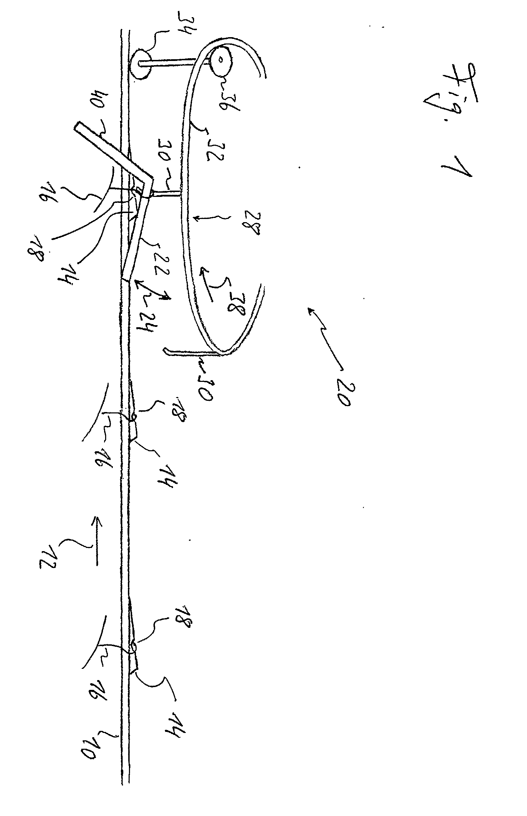

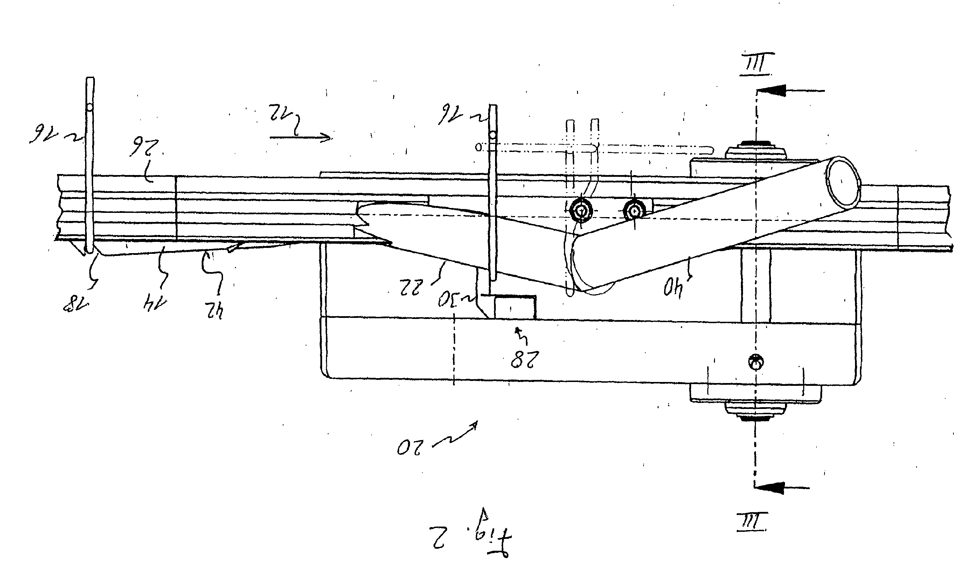

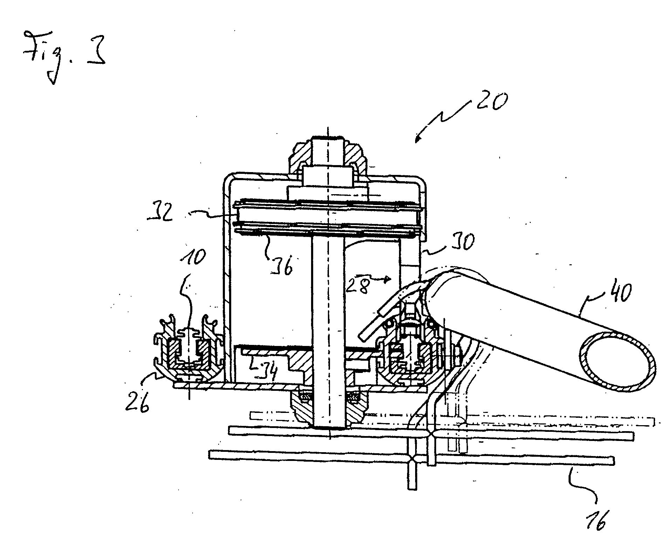

Aufbau und Arbeitsweise der beispielgemäßen Hängefördereinrichtung werden nachstehend unter gemeinsamer Heranziehung der Prinzipskizze der Fig. 1 und der Detaildarstellungen der Figuren 2 und 3 erläutert. Die Hängefördereinrichtung umfasst eine primäre Antriebskette 10, welche in nicht näher dargestellter Weise von einem Antriebsmotor zur Bewegung in Richtung eines Pfeils 12 entlang eines geschlossenen Umlaufwegs angetrieben wird. An der Antriebskette 10 sind in regelmäßigen Abständen Mitnehmerklinken 14 befestigt, welche der Mitnahme je eines Kleiderbügels 16 längs des von der Antriebskette 10 zurückgelegten Wegs dienen. An den Kleiderbügeln 16 hängen nicht gezeigte Bekleidungsstücke, die mittels der Hängefördereinrichtung transportiert werden sollen. Die Mitnehmerklinken 14 schleppen die Kleiderbügel 16 auf einem Gleitbahnensystem, tragen sie dabei aber nicht. Es ist freilich nicht ausgeschlossen, dass die Mitnehmerklinken 14 die Kleiderbügel 16 tragen können, so dass reibungsbedingtes Schaukeln der Kleiderbügel 16 vermieden werden kann. Die Mitnehmerklinken 14 weisen an ihrer Oberseite je eine nach oben offene Kerbe 18 auf, in der je ein Kleiderbügel 16 mit seinem oberen Bügelhaken zwecks Mitnahme aufgenommen wird. Auf diese Weise kann eine hohe Transportsicherheit der zu fördernden Bekleidungsstücke gewährleistet werden.

An mindestens einer Stelle entlang des durch den Lauf der Antriebskette 10 definierten Förderwegs der Kleiderbügel 16 ist eine allgemein mit 20 bezeichnete Ausschleusstation angeordnet. Die Ausschleusstation kann sich am Ende der für die Kleiderbügel 16 vorgesehenen Förderstrecke befinden; dann werden alle Kleiderbügel 16 ausgeschleust. Oder sie kann vorher entlang des Förderwegs angeordnet sein; dann wird ggf. wahlweise nur ein Teil der Kleiderbügel 16 ausgeschleust, während ein anderer Teil durchgelassen wird. Die Ausschleusstation 20 weist eine ansteigende Ausheberampe 22 auf, welche vorzugsweise schaltbar ist. Schaltbar bedeutet dabei, dass die Ausheberampe 22 mittels eines nicht näher dargestellten Aktuators zwischen einer Ausschleusstellung und einer Durchlassstellung verstellbar ist. In der Ausschleusstellung ragt die Ausheberampe 22 mit ihrem unten liegenden Rampenfuß in den Förderweg der Kleiderbügel 16, so dass letztere auf die Ausheberampe 22 auflaufen und ausgeschleust werden. In der Durchlassstellung ist die Ausheberampe 22 mit ihrem Rampenfuß aus dem Förderweg der Kleiderbügel 16 herausbewegt, so dass die Kleiderbügel 16 an der Ausheberampe 22 vorbeilaufen und nicht ausgeschleust werden. Diese Verstellbarkeit der Ausheberampe 22 ist in Fig. 1 lediglich schematisch durch einen Doppelpfeil 24 angedeutet. Es versteht sich, dass in einer Ausschleusstation, in der alle ankommenden Kleiderbügel 16 ausgeschleust werden sollen, die Ausheberampe 22 ohne Verstellmöglichkeit fest in ihre Ausschleusstellung eingestellt sein kann.

In den Figuren 2 und 3 ist ein Profilgehäuse 26 zu erkennen, in dem die primäre Antriebskette 10 aufgenommen und geführt ist. Zweckmäßigerweise sind an dem Kettengehäuse 26 zugleich auch Führungsbahnen für die Mitnehmerklinken 14 ausgebildet, um einen ruhigen, geführten Lauf derselben zu erzielen. Die von den Mitnehmerklinken 14 mitgeführten Kleiderbügel 16 umgreifen mit ihren Bügelhaken das Kettengehäuse 26 und gleiten beidseits ihres Hakenscheitels auf Gleitschläuchen, welche in entsprechende Nuten des Kettengehäuses 26 eingelegt sind.

Die durch ihre jeweilige Mitnehmerklinke 14 transportierten Kleiderbügel 16 treten nacheinander in Pfeilrichtung 12 in die Ausschleusstation 20 ein und treffen dort auf die Ausheberampe 22 - vorausgesetzt natürlich, diese befindet sich in ihrer Ausschleusstellung. Der Fuß der Ausheberampe 22 ist so an das Kettengehäuse 26 herangeführt, dass die Mitnehmerklinken 14 ungehindert an der Ausheberampe 22 vorbeilaufen können, jedoch die von den Mitnehmerklinken 14 mitgeführten Kleiderbügel 16 mit ihren Bügelhaken auf die Ausheberampe 22 auflaufen. Zum Ausschleusen der Kleiderbügel 16 müssen diese auf die Ausheberampe 22 hinaufbewegt werden. Hierdurch werden sie aus den Kerben der Mitnehmerklinken 14 herausbewegt und so der Mitnahmeeingriff gelöst. Eine gesonderte Ausschleusmitnehmeranordnung dient dazu, die Kleiderbügel 16 auf der Ausheberampe 22 hochzubewegen. Diese Ausschleusmitnehmeranordnung ist in den Figuren allgemein mit 28 bezeichnet.

Die Ausschleusmitnehmeranordnung 28 weist mindestens einen Ausschleusstift 30 auf, welcher an einer sekundären Antriebskette 32 befestigt ist, die in einer geschlossenen Schleife umläuft. Es versteht sich, dass statt der Kette 32 jedes beliebige andere flexible Zugmittel verwendet werden kann, etwa ein Antriebsriemen. Ein eigenes Antriebsaggregat für die sekundäre Kette 32 ist nicht vorgesehen; vielmehr wird sie über die primäre Antriebskette 10 angetrieben. Hierzu wird mittels eines in die primäre Antriebskette 10 eingreifenden ersten Ritzels 34 Antriebsenergie von der primären Antriebskette 10 abgegriffen und auf ein mit dem ersten Ritzel 34 drehfest verbundenes zweites Ritzel 36 übertragen. Dieses zweite Ritzel 36 greift in die sekundäre Antriebskette 32 ein und treibt diese so in Richtung eines Pfeils 38 an.

Vorzugsweise sind entlang der sekundären Antriebskette 32 mehrere in gleichen Abständen voneinander angeordnete Ausschleusstifte 30 an dieser befestigt. Das Übersetzungsverhältnis des durch die beiden Ritzel 34, 36 gebildeten Räderwerks und der gegenseitige Abstand der Ausschleusstifte 30 sind so eingestellt, dass die Ausschleusstifte 30 und die Mitnehmerklinken 14 synchron zueinander laufen. Jedes Mal, wenn ein Kleiderbügel 16 am Fuß der Ausheberampe 22 ankommt, läuft dabei ein Ausschleusstift 30 in den Bereich des Rampenfußes ein und ergreift den betreffenden Kleiderbügel. Die Ausschleusstifte 30 sind über den Mitnehmerklinken 14 angeordnet und hängen von oben zu den Haken der Kleiderbügel 16 herab. Sie sind so angeordnet, dass sie in Transportrichtung 12 von hinten an die Bügelhaken der Kleiderbügel 16 stoßen und so die Kleiderbügel 16 auf die Ausheberampe 22 hinaufschieben. Sobald die Kleiderbügel 16 an der Spitze der Ausheberampe 22 angelangt sind, rutschen sie auf eine an die Ausheberampe 22 anschließende, abfallende Abwurframpe 40. Auf dieser Abwurframpe 40 rutschen die Kleiderbügel 16 unter Schwerkraft herab. Da sie bei diesem Herabrutschen der Unterstützung durch die Ausschleusstifte 30 nicht mehr bedürfen, ist die Abwurframpe 40 seitlich von der Ausheberampe 22 weggeführt, wie in Fig. 3 gut zu erkennen ist. Von der Abwurframpe 40 gelangen die derart ausgeschleusten Kleiderbügel 16 in nicht näher dargestellter Weise auf eine abzweigende Förderstrecke oder zu einem Sammelplatz, an dem die Bekleidungsstücke von den Kleiderbügeln 16 abgenommen und weiterverarbeitet werden.

Das Übersetzungsverhältnis des Räderwerks 34, 36 kann derart sein, dass die sekundäre Antriebskette 32 die gleiche Laufgeschwindigkeit wie die primäre Antriebskette 10 hat. In diesem Fall wird der gegenseitige Abstand der Ausschleusstifte 30 gleich dem gegenseitigen Abstand der Mitnehmerklinken 14 sein. Es ist freilich auch denkbar, dass die sekundäre Antriebskette 32 über das Räderwerk 34, 36 eine größere Laufgeschwindigkeit als die primäre Antriebskette 10 erfährt. Um weiterhin Synchronität zwischen den Ausschleusstiften 30 und den Mitnehmerklinken 14 zu gewährleisten, wird in diesem Fall der gegenseitige Abstand der Ausschleusstifte 30 größer als der gegenseitige Abstand der Mitnehmerklinken 14 sein.

Wie die Figuren 2 und 3 zeigen, können die Ausheberampe 22 und die Abwurframpe 40 aus Rohrstücken gebildet sein, was die Herstellung besonders einfach macht. Wie ferner besonders in Fig. 2 gut zu erkennen ist, sind die Mitnehmerklinken 14 an ihrer Oberseite zwischen ihrem in Transportrichtung 12 vorlaufenden Ende und ihrer Kerbe 18 mit einer unter einen kleinen spitzen Winkel schräg ansteigenden Auflauffläche 42 ausgeführt. Außerdem sind die Mitnehmerklinken 14 jeweils im Bereich ihres vorderen Endes schwenkbar an der primären Antriebskette 10 gelagert. Diese Schwenkbarkeit der Mitnehmerklinken 14 erlaubt es ihnen, in das Kettengehäuse 26 einzutauchen, wenn auf dem Förderweg vor ihnen ein Hindernis auftaucht, beispielsweise ein Stopper oder ein liegen gebliebener Kleiderbügel 16. Eine nicht näher dargestellte Feder an jeder der Mitnehmerklinken 14 bewirkt, dass die Mitnehmerklinken 14 in ihre aus dem Kettengehäuse 26 herausragende Stellung vorgespannt sind und nur unter Überwindung dieser vorspannenden Federkraft in das Kettengehäuse 26 absenkbar sind.

Treffen die Mitnehmerklinken 14 auf einen vorsätzlich gesetzten Stopper oder einen stehen gebliebenen Kleiderbügel 16, so werden sie federnd abgesenkt und lassen die von ihnen transportierten Kleiderbügel 16 liegen. Falls ein Stopper gesetzt wurde, stauen sich diese in vorgegebenen gleichen Abständen hintereinander auf. Über die Steigung der Auflauffläche 42 und deren Länge kann Einfluss auf den Ablageabstand der Kleiderbügel 16 im Staubereich genommen werden. Weitere Informationen zu den Mitnehmerklinken 14 und deren Eigenschaften bei Auftreten von Hindernissen im Förderweg können der zuvor erwähnten DE 92 09 392 U1 entnommen werden, auf deren Inhalt hier ausdrücklich Bezug genommen wird.

## Patentansprüche

1. Hängefördereinrichtung zum Transport von an Trägerhaken (16) aufgehängtem Fördergut, umfassend
- eine Antriebseinheit mit einem zur Bewegung längs eines Förderwegs angetriebenen, endlos umlaufenden primären Antriebszugmittel (10), insbesondere einer Antriebskette,
- eine Fördermitnehmeranordnung (14) mit einer Vielzahl längs des primären Antriebszugmittels (10) verteilter, zur gemeinsamen Bewegung mit diesem verbundener Fördermitnehmer (14) zur Mitnahme der Trägerhaken (16) längs des Förderwegs sowie
- mindestens eine Ausschleusstation (20) zur Ausschleusung der Trägerhaken (16) aus dem Förderweg,
**dadurch gekennzeichnet, dass** zum Ausschleusen der Trägerhaken (16) diese an der Ausschleusstation (20) durch Aushebemittel (22, 28) aus dem Mitnahmeeingriff mit der Fördermitnehmeranordnung (14) aushebbar sind.

2. Hängefördereinrichtung nach Anspruch 1,
**dadurch gekennzeichnet, dass** die Aushebemittel (22, 28) eine zum Ausschleusen der Trägerhaken (16) in den Förderweg ragende Ausheberampe (22) umfassen, auf welcher die Trägerhaken (16) unter Lösung ihres Mitnahmeeingriffs mit der Fördermitnehmeranordnung (14) hinaufbewegbar sind.

3. Hängefördereinrichtung nach Anspruch 2,
**dadurch gekennzeichnet, dass** die Aushebemittel (22, 28) eine zur Bewegung entlang der Ausheberampe (22) angetriebene Ausschleusmitnehmeranordnung (28) umfassen, mittels welcher die Trägerhaken (16) auf der Ausheberampe (22) hinaufbewegbar sind.

4. Hängefördereinrichtung nach Anspruch 3,
**dadurch gekennzeichnet, dass** zum Antrieb der Ausschleusmitnehmeranordnung (28) ein endlos umlaufendes sekundäres Antriebszugmittel (32) vorgesehen ist und die Ausschleusmitnehmeranordnung (28) mindestens einen, gewünschtensfalls mehrere längs des sekundären Antriebszugmittels (32) verteilte Ausschleusmitnehmer (30) aufweist, welche zur gemeinsamen Bewegung mit diesem verbunden sind.

5. Hängefördereinrichtung nach Anspruch 4,
**dadurch gekennzeichnet, dass** mittels eines in das primäre Antriebszugmittel (10) eingreifenden Räderwerks (34, 36), insbesondere Zahnräderwerks, Antriebsenergie von dem primären Antriebszugmittel (10) für das sekundäre Antriebszugmittel (32) abgegriffen ist.

6. Hängefördereinrichtung nach Anspruch 4 oder 5,
**dadurch gekennzeichnet, dass** der mindestens eine Ausschleusmitnehmer (30) von oberhalb der Fördermitnehmer (14) her zu den Trägerhaken (16) herabreicht.

7. Hängefördereinrichtung nach einem der Ansprüche 4 bis 6,
**dadurch gekennzeichnet, dass** der mindestens eine Ausschleusmitnehmer (30) als Mitnehmerstift ausgeführt ist.

8. Hängefördereinrichtung nach einem der Ansprüche 2 bis 7,
**dadurch gekennzeichnet, dass** an die Ausheberampe (22) eine Abwurframpe (40) zum Abwerfen der ausgeschleusten Trägerhaken (16) anschließt.

9. Hängefördereinrichtung nach einem der Ansprüche 2 bis 8,
**dadurch gekennzeichnet, dass** die Ausheberampe (22) zwischen einer Ausschleusstellung, in der sie in den Förderweg ragt und längs des Förderwegs antransportierte Trägerhaken (16) auf sie auflaufen, und einer Durchlassstellung verstellbar ist, in der sie aus dem Förderweg herausbewegt ist und antransportierte Trägerhaken (16) durchlässt.

10. Hängefördereinrichtung nach einem der Ansprüche 1 bis 9,
**dadurch gekennzeichnet, dass** die Fördermitnehmer (14) unter den Trägerhaken (16) hindurchreichen und an ihrer Oberseite eine nach oben offene Aussparung (18) zur Aufnahme eines Trägerhakens (16) aufweisen.

11. Hängefördereinrichtung nach Anspruch 10, **dadurch gekennzeichnet, dass** die Fördermitnehmer (14) in Transportrichtung vor ihrer Aussparung (18) eine in Richtung zu ihrem nachlaufenden Ende hin sanft ansteigende Auflauffläche (42) aufweisen und gegen Federkraft in einen Hohlkanal eines das primäre Antriebszugmittel (10) aufnehmenden Führungsgehäuses (26) abtauchbar sind.
